# Europäisches Patentamt

# European Patent Office

# Office européen des brevets

(19)

(11) Publication number: **0 097 950**
**B2**

(12) # NEW EUROPEAN PATENT SPECIFICATION

(45) Date of publication of the new patent specification: 10.05.89

(51) Int. Cl.⁴: **A 23 L 1/236**

(21) Application number: **83106262.5**

(22) Date of filing: **27.06.83**

(54) Stabilized aspartame composition, a process for its production and an aqueous food.

(30) Priority: **28.06.82 JP 111304/82**
**15.02.83 JP 23459/83**

(43) Date of publication of application:
**11.01.84 Bulletin 84/2**

(45) Publication of the grant of the patent:
**10.12.86 Bulletin 86/50**

(45) Mention of the opposition decision:
**10.05.89 Bulletin 89/19**

(84) Designated Contracting States:
**CH DE FR GB IT LI NL SE**

(56) References cited:
**EP-A-0 053 844**
**DE-A-2 438 317**
**US-A-3 600 186**

**Patent Abstracts of Japan, vol. 5, no. 4, 13 January 1981**
**Dwivedi "Low Calorie and Special Dietary Foods"**

(73) Proprietor: **AJINOMOTO CO., INC., 5-8, Kyobashi 1-chome, Chuo- ku, Tokyo 104 (JP)**

(72) Inventor: **Ojima, Takashi, No. 1-32- 8, Kaminagaya Konan- ku, Yokohama- shi Kanagawa- ken (JP)**
Inventor: **Nagashima, Nobuya, No. 1-22- 4, Kugahara Ota- ku, Tokyo (JP)**
Inventor: **Ozawa, Toshiyuki, No. 1330, Ninomiya Ninomiya- cho, Naka- gun Kanagawa- ken (JP)**

(74) Representative: **Schübel- Hopf, Ursula, Strehl Schübel- Hopf Groening Schulz Patentanwälte Maximilianstrasse 54 Postfach 22 14 55, D-8000 München 22 (DE)**

EP 0 097 950 B2

# EP 0 097 950 B2

## Description

The present invention relates to stabilized compositions comprising aspartame in an aqueous medium such as aqueous foods containing aspartame. These compositions according to this invention further comprise a stabilizing agent which allows the long-term storage of the composition or food without significant deterioration of the aspartame.

With the recent increase in the consumption of low-calorie beverages and health foods, aspartame, a low-calorie sweetener offering intense sweetness of very good quality, has been considered one of the best candidates for incorporation in such beverages and foods. But as is often pointed out, when storing aspartame ($\alpha$-L-aspartyl-L-phenylalanine methyl ester) in the presence of water there is met the great problem that its quality is impaired during storage due to the pH and temperature at which such foods and beverages are normally stored. In foods and beverages wherein both water and aspartame are present under weakly acidic or alkaline conditions, in foods and beverages containing aspartame together with a high water content irrespective of pH, or in foods and beverages which are manufactured, stored or distributed at high to medium temperatures while containing aspartame in the presence of water, the aspartame is partially decomposed to diketopiperazine, which is non-toxic and perfectly safe but has no sweetness. This results in reduced sweetness of the food or beverage containing the aspartame. This decrease in the quality of aspartame in the presence of water during storage can be a barrier to its extensive use in sweet aqueous foods and beverages, such as soft drinks and juices, in which currently high amounts of sweeteners are used and which potentially are a major market for low-calorie sweeteners. Therefore, enhancing the storage stability of aspartame in water is very important for expanding its use in processed foods.

This demand has been partially met by storing aspartame at low temperatures and at a controlled pH (the aspartame is stable in a pH range of 4 to 4.5), by adding a Ca or Mg ion releasing material (Japanese Patent Application (OPI) No. 77569/75), or by encapsulating the aspartame (Japanese Patent Application (OPI) No. 202268/82 and Japanese Patent Publication No. 53063/82). However, none of these techniques are completely satisfactory since they cannot be applied to soft drinks and juices with sufficient ability to stabilize the aspartame contained therein.

Furthermore, aspartame does not have sufficiently high dispersibility or solubility in water to be used as a table sweetener or an additive to processed foods as easily as sugar. One method conventionally used to improve the solubility properties of aspartame is to dry it together with an excipient highly soluble in water. The use of an excipient contributes to the improvement of the dispersibility and solubility of the aspartame, but in many cases, aspartame treated by this method is not as stable in water as aspartame that is coated with water-insoluble substances such as fats and oils. Therefore, no conventional technique is ideal because it cannot satisfy simultaneously the requirements of high storage stability and improved solubility and dispersibility which are generally incompatible with each other.

According to another known method for stabilizing a dipeptide sweetener composition (EP-A-0 053 844) it has been necessary to combine four essential components, i.e. a solid fat, an emulsifier for the solid fat, a polysaccharide and a dipeptide sweetener, such as aspartame. In the known composition at least 20 per cent by weight of the solid fat is necessary in order to obtain the desired stabilization of the dipeptide sweeteners. Such high content of solid fat however is not desirable in many foods and beverages which originally have a low fat content.

It has been further known that polymeric dextrins may be used as an agent for increasing the bulkiness of a sweetener composition which contains a dipeptide sweetener. The function of increasing the bulkiness however is not comparable with the function as a stabilizer. Furthermore polydextrins are flexible open chain polymers which regarding their specific structure and physico-chemical characteristics are different from cyclodextrins.

Considering the above-described prior art, the task to be solved by the present invention is to stabilize dipeptide sweeteners in aqueous solutions and to provide an aqueous aspartame containing composition which is stable during long-term storage in spite of the aqueous environment.

According to the invention it is intended to provide aspartame containing foods and beverages having a high water content, which are stable during long-term storage.

By the present invention there is provided a stabilized aspartame composition comprising aspartame in an aqueous medium which is characterized in that the composition further comprises as a stabilizer a cyclodextrin.

By the invention there is further provided a process for producing an aspartame sweetener composition, which comprises:

mixing aspartame with a cyclodextrin in the presence of water or an aqueous solvent.

The invention further provides an aqueous food, especially a fluid or semi-fluid food which contains the above described stabilized aspartame composition

## Description of the preferred embodiments

According to the present invention, the stability of aspartame in water can be improved by using it together with a cyclodextrin. The dispersibility and solubility of aspartame in water can also be enhanced by entrapping the aspartame in the cyclodextrin. Additional studies further demonstrated that the stability of aspartame in water can be further improved by incorporating a sucrose fatty acid ester conventionally used as an edible surfactant into the aspartame composition in combination with a cyclodextrin.

Accordingly, one aspect of the present invention relates to an aspartame composition which contains a cyclodextrin preferably in a molar ratio of 200 : 1 to 1 : 50 with respect to the aspartame as well as to an aqueous food or beverage that contains said composition.

The cyclodextrin used in the present invention (hereafter abbreviated as CD) is a cyclic oligosaccharide homolog that is also known as a cycloamylose. It consists of 6 to 10 D-glucopyranose groups bonded through $\alpha$-(1,4)-glucoside bonds to form a cyclic structure. It is named $\alpha$-CD, $\beta$-CD or $\gamma$-CD according to the degree of polymerization (6, 7 or 8 glucose units). The interior of the ring contains C-H bonds or ether bonds and is hydrophobic, while the exterior of the ring is interspersed with OH groups and is highly hydrophilic. Because of this structure, CD is capable of entrapping various compounds in the interior of the cyclic molecule. Previously. CD has been used in foods in order to mask a fishy smell (in the protein processing industry), to prevent oxidation (in the fat and oil processing industry), to preserve flavor (in spices), and to prevent moisture absorption and deliquescence (in sugared foods).

CD is usually produced from starch by treating it with an amylase or a similar enzyme produced from Bacillus macerans or an alkali-resistant bacterium. There are no particular limitations on the CD that can be used in the present invention with respect to the conditions for producing it or other factors. According to a preferred embodiment of the present invention, $\alpha$-CD, $\beta$-CD and $\gamma$-CD may be used either independently or as a mixture, although the intended object of the present invention can be achieved with any type of CD.

The stability of aspartame in water can be improved by using CD in a trace amount in a molar ratio of 1 : 200. Using CD in an amount greater than 50 times the amount of aspartame is not only uneconomical, but it is also detrimental to the purpose of reducing the caloric content. Therefore, the practical acceptable molar ratio of aspartame to CD is in the range of from 200 : 1 to 1 : 50.

The stability of aspartame in water can be improved by simply using it together with the CD, but for the purpose of improving its dispersibility and solubility in water in addition to its stability in water, it is preferred that at least a part of the aspartame be entrapped in the CD. One particularly useful application of this aspect of the invention is that it allows the preparation of an aspartame sweetener composition; i.e., a composition intended for use by the ultimate consumer as a table sweetener. Thus the aspartame compositions containing a cyclodextrin, and particularly those in which aspartame is entrapped within the cyclodextrin, have sufficient solubility and dispersibility that they may be used as table sweeteners.

Any method can be used for entrapping the aspartame in the CD, and a typical method is described for purposes of illustration. First, the aspartame is mixed with CD in the presence of water or an aqueous solvent such as aqueous alcohol. If desired, an excipient such as dextrin, sugar, sugar alcohol, polysaccharides, protein, amino acid, or salt or a flavor or any other quality modifler may also be used. Water and other aqueous solvents may be used in any amount that enables the formation of the desired entrapped compound. The resulting solution or slurry containing both the aspartame and CD is preferably heated to a temperature between about 30 and 90°C in order to increase the solubility of the aspartame and CD to such an extent that they can be dissolved in the least possible amount of water (i.e., a uniform product is produced by using a minimum amount of water and the efficiency of the subsequent drying is increased). The aspartame may be added either as a mixture with CD or as a separately prepared solution or slurry of the aspartame. But apart from the case where the aspartame has been made easily soluble by using another excipient, the preparation of a separate solution or slurry of the aspartame is preferred in order to facilitate the subsequent step of dissolving the CD.

The slurry is intimately mixed in a homogenizer, a kneader or the like for a period which generally ranges from about 30 minutes to a few hours. Mixing continues until the viscosity of the slurry is slightly increased to provide a pasty hydrous product wherein all or part of the aspartame is entrapped in the CD. When the mixture of aspartame and CD is a solution, it is stirred for a period of about 30 minutes to a few hours. In consequence, the greater part of the entrapped aspartame is obtained as a precipitate, which may be recovered by any suitable method such as removal of the solvent or recrystallization by cooling.

The solution or slurry containing the aspartame and CD may be directly used as a liquid or pasty sweetener. The sweetener having aspartame entrapped with CD shows a higher dispersibility and solubility of the aspartame in water than one having no entrapped aspartame. Thus the product according to the present invention not only has high dispersibility and solubility in water but also has enhanced stability against storage in water, so it can be used advantageously as a sweetener for incorporation in processed foods and beverages or as a table sweetener.

Another significant feature of the present invention is to provide fluid or semi-fluid aqueous foods wherein the aspartame keeps its initial quality for an extended period. The stability of the quality of the aspartame can be improved without entrapping it in the CD. Furthermore, the amount of the CD added can be held to a minimum, so an aqueous food that has a very low calorie content and which can be stored for an extended period can be provided with high efficiency according to the present invention. To give a specific example, a beverage as sweet as a conventional soft drink, for example, one containing 5 g of sucrose per 100 ml, can be offered by the present invention while reducing the calorie content to a negligible level, i.e., about 1/100 to 5/1,000 of the calorie content of the conventional soft drink.

The present invention also includes aqueous compositions which contain, in combination with a cyclodextrin as described above, a sucrose fatty acid ester. Preferred aspects of this invention therefore relate to an aspartame-containing aqueous food that, additionally, contains 0.008 to 3 wt-% of a sucrose fatty acid ester.

The term "sucrose fatty acid ester" as used in the present invention refers to an edible surfactant composed of sucrose and a fatty acid, many examples of which are known to the prior art for use in other methods and compositions. Numerous references are available which describe sucrose fatty acid esters and their production. These include "Sucrose Ester of Fatty Acid; Part 1", Ishizuka et al., Journal of Food Industry, 14 (1971); "Sucrose Ester of Fatty Acid; Part 2: Fundamental physiological properties", Watanabe et al., Journal of Food Industry, 14 (12), 65-71 (1971); "Sucrose Ester of Fatty Acid; Part 3", Watanabe, Journal of Food Industry, 14 (16), 105-111 (1971); "The Surface chemistry of Alkyl Esters of Sucrose", Osipow et al., J.A.U.C.S, 35, 127-129 (1958); and "DK-Ester" (a monograph on sucrose fatty acid ester by DKS International, Inc,).

Since sucrose fatty acid esters are digested in the human body and absorbed as sucrose along with a fatty acid, their use in foods is unlimited. The exact nature of these compounds varies greatly according to the proportions of the fatty acids (e.g., stearic acid, palmitic acid, lauric acid and oleic acid) used to form the ester. Any type can be used in the present invention and preferably it has a HLB value within the range of from 2 to 19. The sucrose fatty acid ester is preferably used in a concentration of 0.008 to 3 wt-% of the food in which it is incorporated. There is no particular upper limit to the concentration of the sucrose fatty acid ester, but, organoleptically, it should not exceed 3 % (in terms of the concentration in the actual form of food intake; this also applies to a concentrated food). More specifically, the range of 0.01 to 1 wt-% is optimum for enhancing the stability of aspartame in water together with said cyclodextrin without impairing the organoleptic characteristics of the food. As long as the concentration of the sucrose fatty acid ester is within the range of 0.008 to 3 wt-%, any other edible surfactant such as glycerol fatty acid ester, sorbitan fatty acid ester or soybean phospholipid may also be added in a concentration of about 0.005 to 1 %.

The sucrose fatty acid ester may be added by any method and at any time during preparation of the cyclodextrin containing composition so long as it is uniformly dispersed or dissolved in the aqueous phase of the final product. However, if the aspartame is heated in the presence of water during food production or if there is the possibility of reduced aspartame stability due to the aging, it is more effective to add the sucrose fatty acid ester to the composition prior to or simultaneously with the aspartame. It is also desirable to incorporate to the cyclodextrin as described above a conventional agent capable or enhancing the stability of aspartame in water or to incorporate an agent to control the pH to be in a stable region for aspartame (e.g., a pH lowering agent such as an organic acid or amino acid, a pH increasing agent, or a pH buffering agent).

The compositions of the invention are suitable for use in any aqueous food to replace sugars normally used as sweeteners. The term "aqueous foods" as used herein refers to all foods except dried foods and oily foods, and includes beverages such as juice, cola, sports drinks (i.e., isotonically balanced drinks), coffee, tea, cacao, dairy milk, fruit-flavored milk, coffee-flavored milk, soybean milk, conditioned soybean milk, flavored soybean milk, amazake (sweet sake made from fermented rice), silko (azuki soup with rice cake), ginger ale, milk shakes, tomato juice and other vegetable juices; yogurt, jelly, Bavarian cream, pudding, and mousse; sauces such as ketchup, mayonnaise, salad dressings, Worcester sauce, fruit-flavored sauce, chocolate sauce, tomato sauce and chill sauce; creams, toppings, fillings and jams; frozen desserts such as ice creams and sherbets; pickle syrups, and pickling syrup; chewing gum, bean jellies, condensed milk, cooked beans and yokan (Japanese sweet jelly of bean). The present invention is particularly effective for enhancing the stability of aspartame in the above-named aqueous foods and beverages which are canned, bottled, pouched, packed or otherwise packed in manners suitable for shipping and display at room temperature or in a chilled state.

A particularly preferred embodiment of the invention comprises fluid and semi-fluid aqueous foods produced as described herein. The term "fluid aqueous foods" as used herein refers to beverages such as those described above or other readily flowing compositions of high water content. The term "semi-fluid aqueous foods" as used herein refers to viscous flowable foods, optionally containing solids, such as yogurt, jelly, Bavarian cream, pudding, ketchup, mayonnaise, salad dressings, chocolate sauce, tomato sauce, and similar items. The invention is of particular relevance to these fluid and semi-fluid aqueous foods because of the high water content of these foods, which normally contributes to rapid degradation of aspartame.

There is no particular limitation on the concentration of aspartame in these foods, and the concentration may be properly determined according to the sweetness of the aqueous food in which the aspartame is to be used. Needless to say, the aspartame may be used together with known natural sweeteners such as sucrose, saccharides, sugar alcohol and stevioside, as well as with artificial sweeteners such as saccharin.

## Example 1

Aqueous solutions containing aspartame and CD in the amounts indicated in Table 1 were prepared. As a control, an aqueous solution containing only aspartame was prepared. All samples were stored at 24°C to check the long-term stability of aspartame.

**Table 1**

| | Sample composition | | Percent residual aspartame stored at 24°C | |
|---|---|---|---|---|
| | conc. of aspartame (mole/1,000 ml) | conc. of β-CD (mole/1,000 ml) | 18 days | 45 days |
| 1 | 0.365 | 0 | 92.8 | 80.0 |
| 2 | 0.365 | 0.002 | 93.5 | 81.8 |
| 3 | 0.365 | 0.012 | 94.0 | 83.0 |
| 4 | 0.365 | 0.023 | 97.9 | 87.1 |
| 5 | 0.365 | 0.083 | 99.0 | 88.6 |

The table shows that the long-term stability of the aspartame could be improved by using β-CD in a low concentration which was only about five thousandths of a mole with respect to one mole of the aspartame. The aspartame mixed with β-CD in a molar ratio of about 1,5 underwent little decomposition when it was stored at 24°C for 18 days.

## Example 2

"Cyclo TC" is the trade name for a cyclodextrin manufactured by Toyo Jozo co., Ltd., with a cyclodextrin formulation of 30 % α-CD and 50 % total CD. Cyclo TC (30 parts) was mixed with water (90 parts) to form a slurry, to which was added a wet cake prepared by mixing aspartame (100 parts) with water (30 parts). While retained at 35-45°C, the mixture was agitated in a kneader for one hour. The resulting hydrous mixture was vacuum dried at 40-50°C and ground with a speed mill to produce a particulate compound wherein the aspartame was entrapped in cyclo TC (water content: 3.5 %, particle size: 330 μm in 50 %).

The solubility of the so prepared sample of the present invention was compared with that of a control sample which consisted of only bulk aspartame. The results are shown in Table 2 from which one can see that the dispersibility of the aspartame in water can be increased by entrapping it in the cyclodextrin, as evidenced by a shorter time required for dissolving the sample of the present invention in water (1/3 to 1/5 of the time necessary for dissolving the control sample).

**Table 2**

| | Dispersibility | Dissolution rate[1] |
|---|---|---|
| sample of the present invention | dispersed and suspended in water as soon as the sample was put in water | 4 min. |
| control sample | floating lumps prevented rapid dispersion in water | 1-20 min. |

[1] The time until 1.0 g of aspartame completely dissolved in 100 ml of water (35°C in a 200-ml beaker by stirring with a magnetic stirrer (100 r.p.m.) was measured.

## Example 3

"Celdex N" is the trade name for a β-cyclodextrin manufactured by Japan Maze Products Co., Ltd. Celdex N (100 parts) was mixed with water (200 parts) to form a slurry, to which was added a wet cake prepared by mixing aspartame (200 parts) with water (60 parts). The mixture was processed as in Example 2 to prepare a particulate compound wherein the aspartame was entrapped in CD.

The solubility of the so prepared sample of the present invention was compared with that of a control sample which consisted of only bulk aspartame. The results are shown in Table 3, from which one can see that the water solubility of the aspartame entrapped in CD was higher than that of the untrapped aspartame by about 24 % (at 5°C) and 10 % (at 25°C).

**Table 3**

| | Aspartame solubility (g/100 g $H_2O$) | |
|---|---|---|
| | 5°C | 25°C |
| sample of the present invention | 0.92 | 1.29 |
| control sample | 0.74 | 1.17 |

**Example 4**

Two parts of the particulate compound prepared in Example 3 was mixed with 98 parts of sucrose and 12 parts of water (binder), and a granular sweetener was prepared from this mixture by the fluid granulation process. Control No. 1 was prepared from a mixture of aspartame (1.3 parts), celdex N (0.7 part) and sucrose (98 parts) by the same method, control No. 2 consisting of only bulk aspartame was also prepared. The dispersibility, dissolution rate, and aspartame stability against storage (at 24°C) were checked for each sample. The results are shown in Table 4.

**Table 4**

| | | Solubility | | Storage stability[2] percent residual |
|---|---|---|---|---|
| | dispersibility | | dissolution rate[1] | aspartame |
| sample of the present invention | dispersed as soon as the sample was put in water | | 45 sec | 96.0 |
| control No. 1 | dispersed as soon as the sample was put in water | | 150 sec | 91.7 |
| control No. 2 | floating lumps prevented rapid dispersion in water | | 15-20 min | 80.0 |

[1]  The rate of dissolving 1.0 g of aspartame in 100 ml of water at 35°C as in Example 1.
[2]  A solution containing 0.5 g of aspartame in 100 ml of water was stored in an incubator (24°C) for 45 days. Thereafter, the residual aspartame was determined by an analyzer of Hitachi, Ltd.

As Table 4 shows, the granular sweetener of the present invention could be dissolved in water in a period which was only 1/3 to 1/26 of the time necessary for dissolving the controls wherein the aspartame was not entrapped in CD; furthermore, the storage stability of the sample of the present invention was 5 to 20 % higher than that of the controls.

**Example 5**

Water (75 parts) was added to Cyclo TC (30 parts), and the mixture was heated at 4°C. Then, a slurry prepared by adding aspartame (30 parts) to water (30°C) was added to the mixture. The resulting mixture was kneaded as in Example 1 to prepare a paste, which was dissolved under stirring in a mixture of a strawberry flavor (0.15 part), citric acid (0.3 part) and water (35 part) to provide a strawberry syrup (pH 4.2).

The syrup was stored in an incubator (15°C) for 60 days. The decomposition of the aspartame was negligible and its residual content was as high as 99.5 %. In an organoleptic test, the number of the panelists who liked the flavor of a sample of the present invention was significantly larger than that of those who liked the flavor of a strawberry syrup having the same degree of sweetness.

## Example 6

To 500 ml of Coca-Cola (manufactured by Fuji Coca-Cola Bottling co., Ltd.), 0.35 g of the aspartame-entrapped compound prepared in Example 2 was added. The mixture was rebottled and sterilized by heating in water (80°C) for 20 minutes to prepare an aspartame-containing Coca-Cola. A control Coca-Cola containing 0.27 g of bulk aspartame was prepared by the same method.

The two Coke samples were stored in an incubator (24°C) for 45 days. The sample having the aspartame entrapped in CD retained 87.2 % of the residual aspartame, which was about 10 % higher than the percent residual aspartame in the control (79.8 %). In an organoleptic test, the Coke sample having the aspartame entrapped in CD was found to have a more intense sweetness of better quality than the control.

## Example 7

To 500 ml of commercial orange juice (manufactured by Pocca Lemon Co., Ltd.), 0.53 g of the aspartame-entrapped compound prepared in Example 1 was added. The mixture was bottled and sterilized by heating in water (80°C) for 20 minutes to prepare an aspartame-containing orange juice. A control orange juice containing 0.41 g of bulk aspartame was prepared by the same method.

The two orange juice samples were stored in an incubator (24°C) for 45 days. The sample having the aspartame entrapped in CD retained 86.3 % of the residual aspartame, which was about 8 % higher than the percent residual aspartame in the control (79.2 %).

In an organoleptic test, the orange juice sample having the aspartame entrapped in CD was found to have a more intense sweetness of better quality and was more flavorful than the control.

## Claims

1. A stabilized aspartame composition comprising aspartame in an aqueous medium, characterized in that the composition further comprises cyclodextrin as a stabilizer.

2. The composition of claim 1, wherein the molar ratio of aspartame to cyclodextrin is from 200 : 1 to 1 : 50, preferably from 100 : 1 to 1 : 50.

3. The composition of claim 1 or 2, wherein a part or all of the aspartame is entrapped in the cyclodextrin.

4. The composition of any of the claims 1 to 3, wherein the cyclodextrin is alpha-cyclodextrin, betacyclodextrin, gamma-cyclodextrin or a mixture thereof.

5. The composition of any of the claims 1 to 4 additionally comprising a sucrose fatty acid ester incorporated into the aspartame composition.

6. A process for producing an aspartame sweetener composition, which comprises:

heating a solution or slurry of cyclodextrin in water at 30 to 90°C, whereby a cyclodextrin composition is produced,

mixing the cyclodextrin composition intimately with aspartame, whereby an aspartame composition is obtained, and

drying the aspartame composition at a temperature not higher than 80°C.

7. Aqueous food, especially fluid or semi-fluid food, containing a stabilized aspartame composition according to any of the claims 1 to 5.

## Patentansprüche

1. Stabilisierte Aspartam-Zusammensetzung, die Aspartan in einem wäßrigen Medium enthält, dadurch gekennzeichnet, daß die Zusammensetzung zusätzlich Cyclodextrin als Stabilisator enthält.

2. Zusammensetzung nach Anspruch 1, worin das Molverhältnis von Aspartam zu Cyclodextrin von 200 : 1 bis 1 : 50, vorzugsweise von 100 : 1 bis 1 : 50 beträgt.

3. Zusammensetzung nach Anspruch 1 oder 2, worin ein Teil des oder das gesamte Aspartam in dem Cyclodextrin eingeschlossen ist.

4. Zusammensetzung nach einem der Ansprüche 1 bis 3, worin das Cyclodextrin ein α-Cyclodextrin, β-Cyclodextrin, γ-Cyclodextrin oder ein Gemisch davon ist.

5. Zusammensetzung nach einem der Ansprüche 1 bis 4, die zusätzlich einen der Aspartam-Zusammensetzung einverleibten Saccharosefettsäureester enthält.

6. Verfahren zur Herstellung einer Aspartan-Süßmittel-Zusammensetzung, welches umfaßt:

das Erhitzen einer Lösung oder Aufschlämmung von Cyclodextrin in Wasser auf 30 bis 90°C, so daß eine Cyclodextrin-Zusammensetzung gebildet wird,

das innige Vermischen der Cyclodextrin-Zusammensetzung mit Aspartam, wobei eine Aspartam-Zusammensetzung erhalten wird, und das Trocknen der Aspartam-Zusammensetzung bei einer Temperatur von nicht mehr als 80°C.

7. Wäßriges Nahrungsmittel, speziell flüssiges oder halbflüssiges Nahrungsmittel, enthaltend eine stabilisierte Aspartam-Zusammensetzung gemäß einem der Ansprüche 1 bis 5.

**Revendications**

1. Composition stabilisée d'aspartame comprenant de l'aspartame dans un milieu aqueux, caractérisée en ce qu'elle contient de la cyclodextrine à titre de stabilisant.

2. Composition selon la revendication 1, caractérisée en ce que le rapport molaire d'aspartame et de cyclodextrine est compris entre 100 : 1 et 1 : 50.

3. Composition selon la revendication 1 ou 2, caractérisée en ce que tout ou partie de l'aspartame est piégé dans la cyclodextrine.

4. Composition selon l'une des revendications 1 à 3, caractérisée en ce que la cyclodextrine est de l'alpha-cyclodextrine, la bêta-cyclodextrine, la gamma-cyclodextrine ou un mélange de celles-ci.

5. Composition selon l'une des revendications 1 à 4, caractérisée en ce qu'elle comprend un ester d'acide gras et de saccharose incorporé à la composition d'aspartame.

6. Procédé pour la production d'un édulcorant à base aspartame, caractérisé en ce qu il consiste à

chauffer une solution ou un sirop de cyclodextrine dans l'eau entre 30 et 90°C pour obtenir une composition de cyclodextrine,

à mélanger intimément la composition de cyclodextrine avec de l'aspartame pour obtenir une composition d'aspartame, et

à sécher la composition d'aspartame à une température non supérieur à 80°C.

7. Aliment aqueux, plus particulièrement aliment fluide ou semi-fluide comprenant une composition stabilisée d'aspartame selon l'une des revendications 1 à 5.